# EUROPÄISCHE PATENTSCHRIFT

(11) **EP 0 772 900 B1**
(45) Veröffentlichungstag und Bekanntmachung des Hinweises auf die Patenterteilung: **23.09.1998**
(21) Anmeldenummer: 95927682.5
(22) Anmeldetag: 20.07.1995
(51) Int. Cl.: H01S 3/038, H01S 3/0977, H01S 3/225

(54) **ENTLADUNGSANORDNUNG FÜR IMPULSGASLASER**
DISCHARGE ARRANGEMENT FOR PULSED GAS LASERS
SYSTEME DE DECHARGE POUR LASERS A GAZ IMPULSIONNELS

(30) Priorität: 22.07.1994 DE 4426723
(43) Veröffentlichungstag der Anmeldung: 14.05.1997
(73) Patentinhaber: ATL LASERTECHNIK & ACCESSOIRES GMBH, 12489 Berlin (DE)
(72) Erfinder: OSMANOW, Rustem, D-12524 Berlin (DE)
(74) Vertreter: Braun, Dieter, Dipl.-Ing.
(86) Internationale Anmeldenummer: EP9502870
(87) Internationale Veröffentlichungsnummer: WO9603789

(56) Entgegenhaltungen:
- EP-A- 0 495 535
- EP-A- 0 502 228
- PATENT ABSTRACTS OF JAPAN vol. 11, no. 209 (E-521) (2656) 7. Juli 1987 & JP,A,62 031 186 (MITSUBISHI ELECTRIC) 10. Februar 1987
- PATENT ABSTRACTS OF JAPAN vol. 015, no. 340 (E-1105) 28. August 1991 & JP,A,03 129 888 (KAWASAKI STEEL) 3. Juni 1991
- PATENT ABSTRACTS OF JAPAN vol. 014, no. 564 (E-1013) 14. Dezember 1990 & JP,A,02 244 686 (FUJI ELECTRIC) 28. September 1990

## Beschreibung

Die Erfindung betrifft eine Entladungsanordnung für Impulsgaslaser mit Laserelektroden, in deren Zwischenraum mittels einer mindestens auf einer Seite Liegenden Anordnung zur Erzeugung von Entladungen mit intensiver UV-Emission eine Vorionisation der Zwischenräume zwischen den Laserelektroden erzeugt wird.

Die Effektivität der Gaslaser, insbesondere der TEA-Laser, welche bei einem Druck von > 1 bar arbeiten, hängt von der Vorionisation des Gasmediums, d. h. von der Anfangselektronenkonzentration im Entladungsvolumen, das Anfangsstadium der Entladungsentwicklung ab. Zur Vorionisation der Zwischenräume zwischen den Laserelektroden ist es bereits bekannt, mit Funkenentladungen zu arbeiten. Eine derartige Entladungsanordnung ist beispielsweise in der älteren, nicht vorveröffentlichten Patentanmeldung DE-A-43 15 973 des Erfinders beschrieben. Darüberhinaus ist eine solche Anordnung aus EP-A-0 502 228 bekannt.

Eine spezielle Methode der Vorionisation eines Gasmediums ist die Gleitentladung, die in den letzten Jahren als intensive UV und VUV Lichtquelle Anwendung findet (A. Baschkin Kvantowaja Elektronika 1976, Bd. 3, No 8, S. 1824-26). Die Gleitentladung gewährleistet eine Strahlung in UV- und VUV-Spektrenbereichen bis zu einer Wellenlänge von λ = 2 nm bei einer Plasmatemperatur in der Entladung bis zu - 3·10⁴ K (Bagen B., u. a. Arbeitsbr. Ins. Plasma Phys. Jülich, 1963, S. 631-34).

Die Gleitentladung wird zwischen den Kathoden- und Anodenelektroden gebildet, die sich auf der Oberfläche des Dielektrikums befinden, auf dessen Rückseite auch die Anodenelektrode angeordnet ist. Der Spannungsimpuls führt hier aufgrund einer vorhandenen Kapazität zwischen den Elektroden zur Entstehung großer Gradienten der Spannung im elektrischen Feld der Kathode. Hierdurch bildet sich eine Vorionisationswelle aus, die von einem Leuchten begleitet ist und sich von der Kathode entfernt und einen Durchschlag auf die Oberfläche des Dielektrikums ermöglicht. Die Gleitentladung ist grundsätzlich als Lichtquelle weitaus besser geeignet als eine freie Funkenentladung (Daniel E., Zeitschr. Techn. Phys. (Russ.) 1979, Bd. 49, No. 6, S. 1241-1244). Weil die Plasmatemperatur der Gleitentladung bedeutend höher als die Temperatur des freien Funkens ist, kommt es zu einer um ca. das 10-fache höheren optischen Ausbeute. Das Spektrum beinhaltet mehr Linien auf Kosten des Dielektrikummaterials. Außerdem haben die Elektroden bei der Gleitentladung eine ganz kleine Errosion, was für die mit einer hohen mit hoher Repetitionsrate arbeitenden Gaslaser von großem Vorteil ist. Hier gut geeignete Materialien mit dielektrischer Oberfläche sind verschiedene Keramiktypen. Keramik besitzt chemische, thermische und mechanische Stabilität sowie eine hohe Durchschlagfestigkeit.

Der Erfindung liegt die Aufgabe zugrunde, eine Entladungsanordnung zu schaffen, die eine deutlich gesteigerte Effektivität der Laserstrahlerzeugung ermöglicht und die Lebensdauer der Komponenten und der Gasfüllung des Lasers verlängert..

Diese Aufgabe wird erfindungsgemäß durch die Merkmale des Anspruchs 1 gelöst. Dadurch, daß die Anordnung von mindestens einer stabförmigen Elektrode gebildet ist, die von einem isolierenden, vorzugsweise keramischen Material umgeben ist und die einen leitenden Kontakt zur Oberfläche des isolierenden, vorzugsweise keramischen Materials aufweist und daß auf dieser Oberfläche in Abstand zu dem Leitenden Kontakt der stabförmigen Elektrode wenigstens eine Gegenelektrode angeordnet ist, die mit einer der Laserelektroden leitend verbunden ist, wobei sich zwischen der stabförmigen Elektrode und der zugehörigen Gegenelektrode Gleitentladungsstrecken ausbilden. Aufgrund dieser Ausbildung ist es möglich geworden, die Vorteile einer Gleitentladung für die Vorionisation des Zwischenraumes zwischen den Laserelektroden zu nutzen.

Gemäß einer bevorzugten Ausführungsform der Erfindung ist es vorgesehen, daß eine äußere Oberfläche der stabförmigen Elektrode abgerundet ausgebildet ist. Es wird so die Ausbildung von Spannungsspitzen vermieden, so daß insgesamt die stabförmigen Elektroden sehr effektiv weit in den Zwischenraum zwischen den Laserelektroden hineinragen können, ohne daß Überschläge zur anderen Laserelektrode auftreten können. Vorzugsweise ist daher die stabförmige Elektrode mit einem pilzförmigen Kopf versehen.

Von Vorteil ist es weiterhin, wenn eine Vielzahl von stabförmigen Elektroden in Reihen beidseitig einer der Laserelektroden angeordnet ist.. Eine derartige Ausbildung begünstigt zusätzlich die Effektivität der Vorionisation des Zwischenraumes zwischen den Laserelektroden. Eine weitere deutliche Optimierung ist erzielbar, wenn die Gegenelektrode von einem Metallblech gebildet ist, das über seine ganze Länge mit einer der Laserelektroden und der Oberfläche des isolierenden, keramischen Materials in elektrischem Kontakt steht.

Vorzugsweise ist es außerdem vorgesehen, daß als Hochspannungsisolator eine ebene Platte aus Keramikmaterial angeordnet ist, auf der eine der Laserelektroden befestigt ist. Vorteilhaft ist es außerdem wenn auf der ebenen Platte zusätzlich auch die Gegenelektrode und die stabförmigen Elektroden befestigt sind. Die einsetzbare ebene Platte aus Keramikmaterial ist leicht herstellbar und im Gegensatz zu Isolatoren aus Kunststoff auch UV-beständig, so daß keinerlei Alterung eintritt.

Vorteilhaft ist es weiterhin, wenn jede Gleitentladungsstrecke an eine eigene Kapazität angeschlossen ist. Dadurch, daß die stabförmigen Elektroden direkt mit jeweils eigenen Kondensatoren gekoppelt sind, wird über eine besonders effektive Vorionisation eine sehr eine hohe Strahlhomogenität und Puls zu Puls Stabilität zu erreicht.

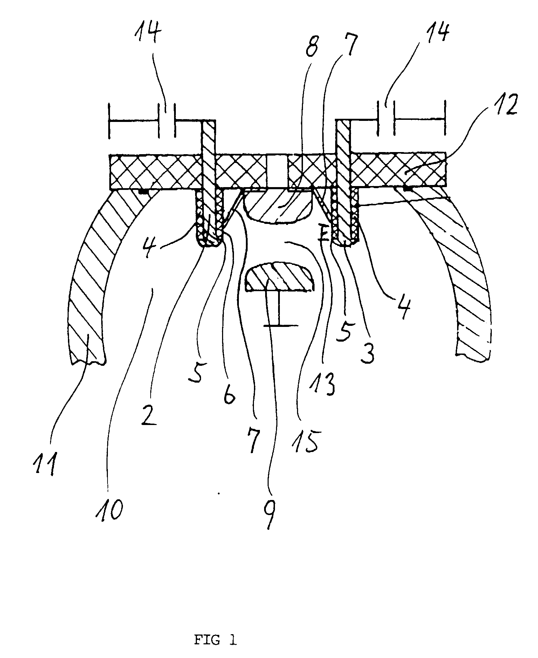

In der Zeichnung ist ein Ausführungsbeispiel der Erfindung dargestellt und wird im folgenden näher beschrieben.

In der der Zeichnung ist mit 1 eine Entladungsanordnung für Impulslaser bezeichnet. Die Entladungsanordnung 1 weist mindestens eine stabförmige metallische Elektrode 2 auf, deren äußere Oberfläche 16 abgerundet ist. Die stabförmige Elektrode 2 ist jeweils mit einem pilzförmigen Kopf 3 versehen. Die stabförmige Elektrode 2 ist vakuumabgedichtet von einem isolierenden, vorzugsweise keramischen Material 4 z. B. aus Al₂O₃ umgeben, wobei deren Ende einen leitenden Kontakt 5 zu einer Oberfläche 6 des isolierenden Materials 4 aufweist. Auf dieser Oberfläche 6 ist wenigstens eine Gegenelektrode 7 aus Metallblech in Abstand zur stabförmigen Elektrode 2 in direktem Kontakt angeordnet, die außerdem mit einer Laserelektrode 8, die hier eine Kathode bildet, über ihre ganze Länge elektrisch leitend verbunden ist. Eine weitere Laserelektrode 9, die eine Anode bildet, ist in einer Entladungskammer 10 angeordnet, die von einer rohrförmigen Wandung 11 umschlossen ist. An der rohrförmigen Wandung 11 ist eine ebene Platte 12 aus Keramikmaterial angeordnet, auf der die Laserelektrode 8, die Gegenelektrode 7 und die in Reihen beidseitig der Laserelektrode 8 angeordneten stabförmigen Elektroden 2 befestigt sind. Zwischen den Laserelektroden 8 und 9 befindet sich der zu ionisierende Zwischenraum 15.

Zwischen jeder stabförmigen Elektrode 2 und der Gegenelektrode 7 bilden sich beim Betrieb der Entladungsanordnung 1 Gleitentladungsstrecken 13 aus. Jede Gleitentladungsstrecke 13 ist über ihre zugehörige stabförmige Elektrode 2 an eine eigene Kapazität 14 angeschlossen.

Während der Ausbildung eines Spannungsimpulses an der Kathode, d. h. an der Laserelektrode 8, beginnen sich die von Kondensatoren gebildeten Kapazitäten 14 über die Gegenelektrode 7 und die stabförmigen Elektroden 2 aufzuladen. Da zwischen der Gegenelektrode 7 und dem pilzförmigen Kopf 3 stabförmigen Elektroden 2 eine Keramikoberfläche angeordnet ist, bildet sich dort an der Gleitentladungsstrecke 13 eine Gleitentladung aus. Das Gasmedium zwischen den Laserelektroden 8 und 9 wird ionisiert, und beim Erreichen einer bestimmten Spannung erfolgt auf den Laserelektroden 8 und 9 die Entladung.

Weil die Gleitentladung recht schnell verläuft, ist die Spannungsanstiegszeit an der Laserelektroden 8, d. h. der Kathode gering. Dieses ermöglicht es, die Wahrscheinlichkeit einer Entladung an der Oberfläche der als Isolator wirkenden ebene Platte 12 aus Keramikmaterial zu verringern. Dabei ist es von großer Bedeutung, daß es möglich geworden ist, diesen Isolator als Platte 12 aus Keramikmaterial, z. B. aus Al₂O₃ herzustellen.

Es ist eine sehr wichtiges Detail der Erfindung und insgesamt von großer Bedeutung für die Technologie von Excimerlasern, daß man den erforderlichen Isolator nunmehr aus Keramik herstellen kann. Keramik besitzt eine hohe chemische, thermische und mechanische Stabilität. Insgesamt ist Keramik das am besten geeeignete Material für dielektrische Oberflächen. Der beschriebene Excimerlaser mit Gleitentladungsvorionisation und einem Isolator aus Al₂O₃-Keramik wurde auf der Basis eines früher erarbeiteten Lasers entwickelt, wobei nochmals auf die bereits genannte ältere Patentanmeldung DE-A-43 15 973 des Erfinders verwiesen wird.

Es wurde nunmehr eine Generation mit einer Wellenlänge von λ = 193 nm (ArF), 248 nm (KrF), 308 nm (XeCl), 351 nm (XeF) bei einem gemeinsamen Gasdruck bis 8-10 bar erzeugt. Überraschenderweise wird dadurch auch bei hohem Gasdruck eine sehr effektive Vorionisation erreicht, die zu einer hohen Energie der abgestrahlten Laserimpulse pro cm³ Anregungsvolumen ( > 8 mJ/cm³ bei 248 nm) auch bei hohen Repetitionsraten führt und den Aufbau sehr kleiner und leistungsstarker Impulsgaslaser ermöglicht. In den bisher bekannten Impulsgaslasern sind, bezogen auf das aktive Volumen, spezifische Laserimpulsenergien von nur 3-4 mJ/cm³ typisch.

## Patentansprüche

1. Entladungsanordnung (1) für Impulsgaslaser mit Laserelektroden (8, 9), in deren Zwischenraum (15) mittels einer mindestens auf einer Seite liegenden Anordnung (2, 3, 4) zur Erzeugung von Entladungen mit intensiver UV-Emission eine Vorionisation der Zwischenräume (15) zwischen den Laserelektroden (8, 9) erzeugt wird, dadurch gekennzeichnet, daß die Anordnung (2, 3, 4) von mindestens einer stabförmigen Elektrode (2) gebildet ist, die von einem isolierenden, vorzugsweise keramischen Material (4) umgeben ist und die einen leitenden Kontakt (5) zur Oberfläche (6) des isolierenden, vorzugsweise keramischen Materials (4) aufweist und daß auf dieser Oberfläche (6) in Abstand zu dem leitenden Kontakt (5) der stabförmigen Elektrode (2) wenigstens eine Gegenelektrode (7) angeordnet ist, die mit einer der Laserelektroden (8) leitend verbunden ist, wobei sich zwischen der stabförmigen Elektrode (2) und der zugehörigen Gegenelektrode (7) Gleitentladungsstrecken (13) ausbilden.

2. Entladungsanordnung (1) nach Anspruch 1, dadurch gekennzeichnet, daß eine äußere Oberfläche (16) der stabförmigen Elektrode (2) abgerundet ausgebildet ist.

3. Entladungsanordnung (1) nach den Ansprüchen 1 und 2, dadurch gekennzeichnet, daß die stabförmige Elektrode (2) mit einem pilzförmigen Kopf (3) versehen ist.

4. Entladungsanordnung (1) nach wenigstens einem der vorhergehenden Ansprüche, dadurch gekennzeichnet, daß eine Vielzahl von stabförmigen Elektroden (2) in Reihen beidseitig einer der Laserelektroden (8) angeordnet ist.

5. Entladungsanordnung (1) nach wenigstens einem der vorhergehenden Ansprüche, dadurch gekennzeichnet, daß die Gegenelektrode (7) von einem Metallblech gebildet ist, das über seine ganze Länge mit einer der Laserelektroden (8) und der Oberfläche (6) des isolierenden, keramischen Materials (4) in elektrischem Kontakt steht.

6. Entladungsanordnung (1) nach wenigstens einem der vorhergehenden Ansprüche, dadurch gekennzeichnet, daß als Hochspannungsisolator eine ebene Platte (12) angeordnet ist, auf der eine der Laserelektroden (8) befestigt ist.

7. Entladungsanordnung (1) nach wenigstens einem der vorhergehenden Ansprüche, dadurch gekennzeichnet, daß als Hochspannungsisolator eine ebene Platte (12) angeordnet ist, auf der eine der Laserelektroden (8) sowie die Gegenelektrode (7) und die stabförmigen Elektroden (2) befestigt sind.

8. Entladungsanordnung (1) nach wenigstens einem der vorhergehenden Ansprüche, dadurch gekennzeichnet, daß jede stabförmige Elektrode (2), d. h. jede Gleitentladungsstrecke (13), an eine eigene Kapazität (14) angeschlossen ist.

## Claims

1. A discharging arrangement for pulsed gas lasers, with laser electrodes (8, 9), in whose intervening space (15) a pre-ionisation of the intervening space between the electrodes (8, 9) is generated by means, positioned on at least one side, of an arrangement (2, 3, 4) for the generation of discharges with intensive UV emissions, characterised in that the arrangement (2, 3, 4) is formed of at least one rod-shaped electrode (2), which is surrounded by an insulating, preferably ceramic material (4) and which has a conducting contact (5) to the surface (6) of the insulating, preferably ceramic material (4) and that on this surface (6) at least one counter electrode (7) is arranged at a distance from the conducting contact (5) of the rod-shaped electrode (2), which is joined conductively to one of the laser electrodes (8), whereby surface discharge paths (13) form between the rod-shaped electrode (2) and the associated counter electrode (7).

2. A discharge arrangement (1) according to Claim 1, characterised in that an outer surface (16) of the rod-shaped electrode (2) is rounded in shape.

3. A discharge arrangement (1) according to Claims 1 and 2, characterised in that the rod-shaped electrode (2) is provided with a mushroom shaped head (3).

4. A discharge arrangement (1) according to at least one of the foregoing Claims, characterised in that a multiplicity of rod-shaped electrodes (2) is arranged in rows on either side of one of the laser electrodes (8).

5. A discharge arrangement (1) according to at least one of the foregoing Claims, characterised in that the counter electrode (7) is formed from a metal sheet, which is in electrical contact over its entire length with one of the laser electrodes (8) and the surface (6) of the insulating ceramic material (4).

6. A discharge arrangement (1) according to at least one of the foregoing Claims, characterised in that a flat plate (12) is arranged as high voltage insulator, on which one of the laser electrodes (8) is fastened.

7. A discharge arrangement (1) according to at least one of the foregoing Claims, characterised in that a flat plate (12) is arranged as high voltage insulator, on which one of the laser electrodes (8) as well as the counter electrode (7) and the rod-shaped electrodes (2) are fastened

8. A discharge arrangement (1) according to at least one of the foregoing Claims, characterised in that each rod-shaped electrode (2), i.e. each surface discharge path (13), is connected to its own capacitor (14).

## Revendications

1. Système de décharge (1) pour lasers à gaz impulsionnels comprenant des électrodes de laser (8, 9) dans l'espacement (15) desquelles une préionisation des espacements (15) est générée entre les électrodes de laser (8, 9) à l'aide d'un système (2, 3, 4) disposé au moins sur un côté et destiné à générer des décharges avec une émission intensive d'ultraviolets, caractérisé en ce que le système (2, 3, 4) est formé par au moins une électrode (2) en forme de barrette, entourée par un matériau isolant (4), de préférence céramique et qui présente un contact (5) conducteur avec la surface (6) du matériau isolant (4), de préférence céramique et en ce que sur cette surface (6), à distance du contact (5) conducteur de l'électrode (2) en forme de barrette est disposée au moins une contre-électrode (7) qui est reliée de manière conductrice avec l'une des électrodes de laser (8), grâce à quoi des sections de décharge rampante (13) se forment entre l'électrode (2) en forme de barrette et la contre-électrode (7) correspondante.

2. Système de décharge (1) selon la revendication 1, caractérisé en ce qu'une surface extérieure (16) de l'électrode (2) en forme de barrette est arrondie.

3. Système de décharge (1) selon la revendication 1 et la revendication 2, caractérisé en ce que l'électrode (2) en forme de barrette est munie d'une tête (3) en forme de champignon.

4. Système de décharge (1) selon au moins l'une quelconque des revendications précédentes, caractérisé en ce que plusieurs électrodes (2) en forme de barrette sont disposées en rangées des deux côtés de l'une des électrodes de laser (8).

5. Système de décharge (1) selon au moins l'une quelconque des revendications précédentes, caractérisé en ce que la contre-électrode (7) est formée d'une tôle métallique qui est en contact électrique, sur toute sa longueur, avec l'une des électrodes de laser (8) et la surface (6) du matériau (4) isolant céramique.

6. Système de décharge (1) selon au moins l'une quelconque des revendications précédentes, caractérisé en ce qu'une plaque (12) plane sur laquelle est fixée l'une des électrodes de laser (8), est disposée en tant qu'isolateur à haute tension.

7. Système de décharge (1) selon au moins l'une quelconque des revendications précédentes, caractérisé en ce qu'une plaque (12) plane sur laquelle sont fixées l'une des électrodes de laser (8) ainsi que la contre-électrode (7) et les électrodes (2) en forme de barrette, est disposée en tant qu'isolateur à haute tension.

8. Système de décharge (1) selon au moins l'une quelconque des revendications précédentes, caractérisé en ce que chaque électrode (2) en forme de barrette, c'est-à-dire chaque section de décharge rampante (13) est raccordée à une capacité propre (14).
